# EUROPEAN PATENT SPECIFICATION

(11) **EP 3 845 869 B1**
(45) Date of publication and mention of the grant of the patent: **05.07.2023**
(21) Application number: 19220219.0
(22) Date of filing: 31.12.2019
(51) Int. Cl.: G01F 15/00, G01F 15/14, G01F 1/06

(54) **ASSEMBLY FOR SECURING A FLOW METER AGAINST OPENING**
ANORDNUNG ZUR SICHERUNG EINES DURCHFLUSSMESSERS GEGEN ÖFFNUNG
ENSEMBLE PERMETTANT DE RENDRE IMPOSSIBLE L'OUVERTURE D'UN DÉBITMÈTRE

(43) Date of publication of application: 07.07.2021
(73) Proprietor: Apator Powogaz Spolka Akcyjna, 62 023 Zerniki (PL)
(72) Inventor: Walowski, Daniel, 60-681 Poznan (PL); Dubkiewicz, Tymoteusz, 61-676 Poznan (PL)
(74) Representative: Wroblewski, Marcin Jan

(56) References cited:
- EP-A1- 2 259 030
- EP-A1- 2 295 941
- EP-A1- 2 530 439
- EP-A1- 3 273 207
- EP-B1- 2 295 941

## Description

### Technical field

The present invention relates to an assembly for securing a flow meter against opening.

### State of the art

Chinese utility model CN202166445U describes a device protecting the water meter cover against theft. This device comprises a water meter cover and a protective element with an annular groove on the outside of the water meter cover. The protective element has a cylindrical shape and can completely cover the water meter cover. It can also rotate relative to the water meter cover. On the inside of the protective element there is a convex clasp with an annular groove located on the outside of the water meter cover. A cylindrical protective element which can completely cover the water meter cover is located on the outside of the water meter cover, and furthermore this element cannot rotate in relation to this cover. Therefore, the cover cannot be clamped directly with the key, and it cannot be unscrewed without damaging the protective element. This prevents unwanted opening of the water meter cover.

Chinese utility model CN109374079A describes a protective structure for the water meter cover. This design comprises a cover to prevent disassembly and a protective cover. The anti-disassembly cover comprises a body and a hinge clamp permanently attached to the top of the body. This clamp connects the protective cover to the body.

The bottom of the anti-disassembly cover has an opening permanently covering the top of the water meter around the entire perimeter, while the top of the anti-disassembly cover has an opening ensuring convenient access to the top of the water meter. The protective cover comprises a body and a handle located at the bottom of the body. The bottom of the body has sliding grooves. At one end of the handle there is a sliding block which can be connected to the grooves by sliding it in. The other end of the handle is attached to the buckle with a hinge. The directions of the sliding grooves are perpendicular to the axis direction of the hinge handle.

German patent DE10353338B4 describes a water meter with a gauging insert located in the meter housing, this gauging insert is fixed with a ring so that it closely adheres to the sealing edge of the housing opening. The device is equipped with a display, and each meter housing is assigned an individual marking shown on a special round marking element. The marking element is characterized in that it is attached to the threaded ring on the meter housing with a ring-shaped fastening element.

European patent application EP3273207A1 discloses a sensor for flow measurement in a pipeline, which comprises a lower sensor part for holding a measuring transducer and an upper sensor part for holding a detector as well as a locking ring arranged between the two parts. The lower sensor part has a housing which at one end has a connection area with an outwardly protruding flange and at the other, opposite end a connection area for connecting the sensor to the pipeline. The upper sensor part has a housing with a collar-shaped connection part at its end, the dimensions of which are larger than those of the flange of the lower sensor part, so that the connection part can be slipped over the connection area of the lower sensor part. The locking ring is arranged between the lower sensor part and the upper sensor part, so that the locking ring rests against the connecting area of the lower sensor part and interacts with the connecting part of the upper sensor part in such a way that the upper sensor part is prevented from becoming detached from the lower sensor part.

A solution is also known in which the water meter lock consists of 3 parts: a mounting ring, a shielding ring and a locking pin. The fastening ring is installed in the water meter as first. Then a shielding ring is applied to this ring in the axial direction, which after being installed turns by a certain angle. The locking occurs after the latches snap over. This is the initial closing of the covers. In the last step, the clamping pin, which blocks the said rings between themselves, is pressed by force preventing them from twisting between themselves. This solution does not allow the initial blocking of the counting mechanism in the production position. What's more, it requires an additional clamping pin to be pushed from the side of the mechanism in the radial direction, which is an additional problem in the automation process.

Furthermore, a solution consisting of a mounting ring which is clamped on the water meter body is known. This ring tightens on the press. However, as in the solution described above, it is not possible to pre-lock the counter mechanism in the production position. In addition, the clamping of the cover is accomplished by plastic deformation of the fastening ring as a result of the plastic latches pushing through the brass body, so after tightening the fastening ring latches may be sheared. What's more, the exposed counter mechanism is exposed to external interference, i.e. opening of the housing and manipulation of the counter mechanism, which the water meter is equipped with.

It would therefore be advisable to develop a flow meter design that would protect the flow meter against interference by third parties and would speed up the process of its verification.

### The summary of the invention

The present invention relates to an assembly for securing a flow meter against opening comprising a mounting ring, a counting mechanism cover, and a shielding ring. The mounting ring is adapted for mounting the flow meter on the meter's body. The said mounting ring comprises at least two security latches adapted for mounting the ring from the side of the flow meter body. In addition, the counting mechanism cover is adapted to lock the mounting ring and the shielding ring and includes at least two elements blocking its rotation relative to the mounting ring. In turn, the shielding ring is adapted to cover the counting mechanism cover. The said mounting ring further comprises at least two retaining latches adapted to support the shielding ring and a pair of ribs adapted to protect against its spreading. The said counting mechanism cover further comprises locking splines preventing the retaining latches of the mounting ring from bending back, wherein the at least to locking elements are also for locking its rotation relative to the shield ring. The shield ring is further adapted to cover the counting mechanism and comprises a pair of ribs reinforced with additional walls to prevent bending outwards and spreading of the mounting ring, at least two notches adapted to latch the retaining latches of the mounting ring, and at least two latches adapted to face its walls with the walls of the mounting ring and block the rotation of the counting mechanism cover in cooperation with the locking elements of the counter mechanism cover.

Using this assembly to protect the flow meter against opening allows the flow meter to be protected against interference by third parties. Using this assembly to secure the flow meter against opening also expedites the process the flow meter verification process.

Preferably, the mounting ring comprises elements indicating the position of the ring.

Preferably, the counting mechanism cover comprises an element indicating the position of the counting mechanism.

Preferably, the latches supporting the mounting ring are equipped with temporary locks, and the counting mechanism cover comprises a spline adapted to cooperate with temporary locks.

Preferably, the counting mechanism cover comprises a stop.

Furthermore, the invention relates to a flow meter comprising the said assembly.

Preferably, the flow meter is adapted to measure the flow of water or gas.

### Advantages of the invention

The solution according to the invention eliminates the need to install additional sealing elements, which in turn increases the automation of the flow meter assembly process.

Furthermore, the solution according to the invention simplifies the assembly of individual parts of the assembly described.

This solution also allows the flow meter to be protected against interference by third parties.

The solution provides for two assembly positions (production and blocked) to streamline the production process.

The shielding ring may contain a number embossed on it, which makes it possible to further number the manufactured meters with previously numbered shielding rings.

### Description of the figures

The subject of the invention is illustrated in the embodiments in the drawing, in which:
Fig. 1A is a perspective view of an assembly for securing a flow meter against being opened which is mounted on a flow meter body according to the invention;
Fig. 1B is an exploded view of an assembly for securing a flow meter against being opened before being assembled on a flow meter body according to the invention;
Fig. 2A is a perspective view of the first embodiment of a mounting ring of a security assembly according to the invention;
Fig. 2B is a top view of the first embodiment of the mounting ring of the security assembly according to the invention;
Fig. 2C is a top view of a portion of the mounting ring of the first embodiment together with indicating elements according to the invention;
Figures 2D-2E are a perspective view of the second embodiment of the mounting ring of the security assembly according to the invention;
Fig. 3A is a perspective view of the first embodiment of a counting mechanism cover according to the invention;
Fig. 3B is a combination of a counting mechanism cover with a shielding ring with visible negative angles;
Fig. 3C is a perspective view of the second embodiment of the counting mechanism cover according to the invention;
Fig. 3D is a top view of the counting mechanism cover in the second embodiment of the invention with a visible stop;
Figs. 4A-C shows subsequent steps of mounting a counting mechanism cover with a mounting ring;

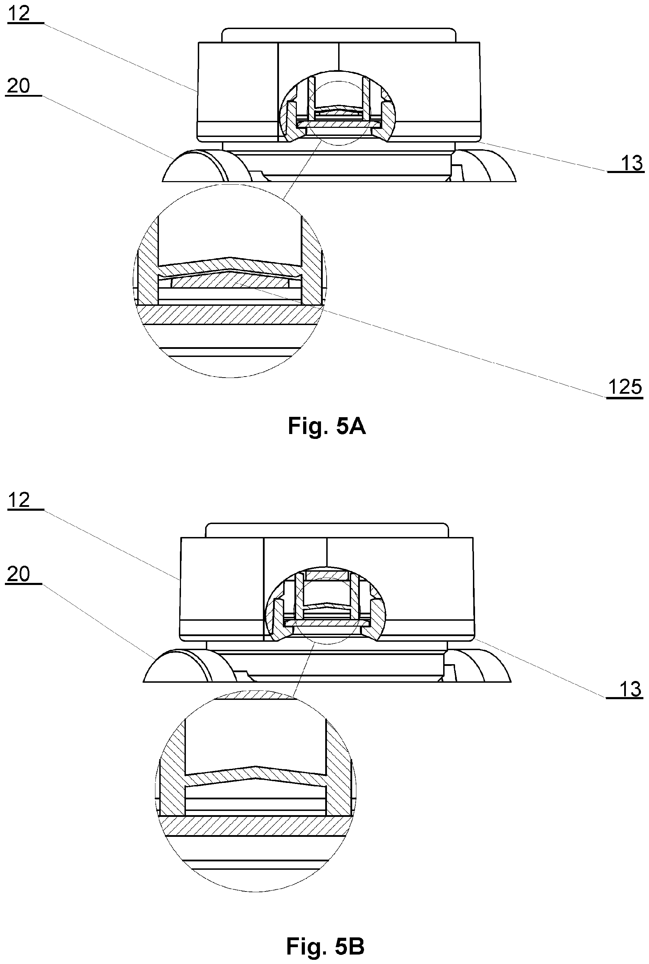

Fig. 5A shows a cover of a counting mechanism together with a mounting ring in a production position on a body of a flow meter according to the invention in a front view in partial section;
Fig. 5B is a front view of a counting mechanism cover with a mounting ring in a locked position on a body of a flow meter according to the invention;
Fig. 6A is a perspective view of the first embodiment of a shielding ring according to the invention;
Fig. 6B is a perspective view of the second embodiment of the shielding ring according to the invention;
Fig. 6C is a top view of a shielding ring according to the invention;
Fig. 6D is a bottom view of a portion of a shielding ring according to the invention;

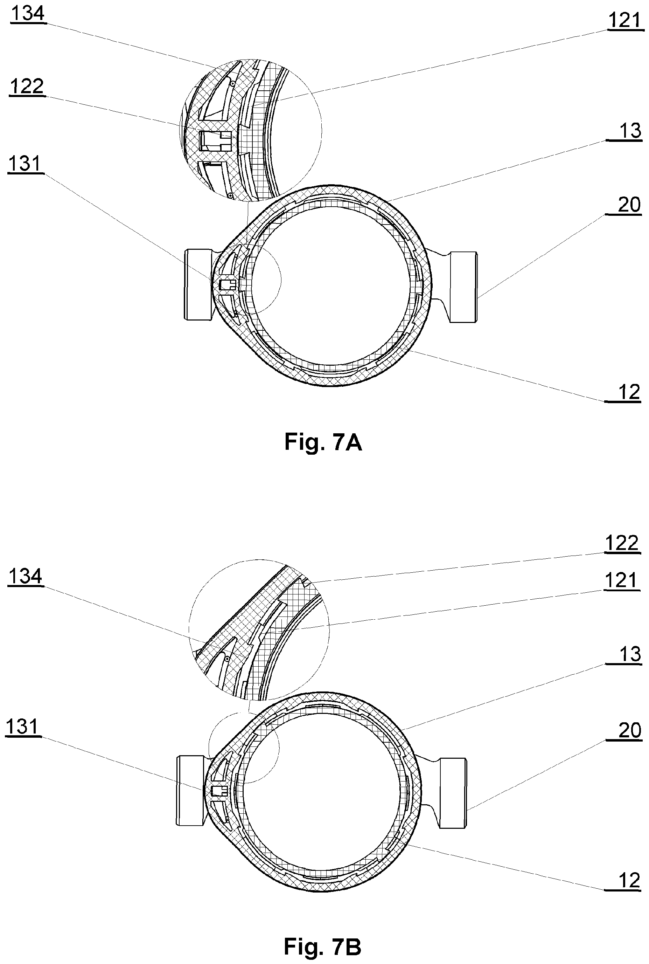

Fig. 7A shows an assembly for securing a flow meter against its opening according to the invention with a counter mechanism in a production position in a top view;
Fig. 7B shows an assembly for securing a flow meter against its opening according to the invention with a counting mechanism in a locked position in a top view;

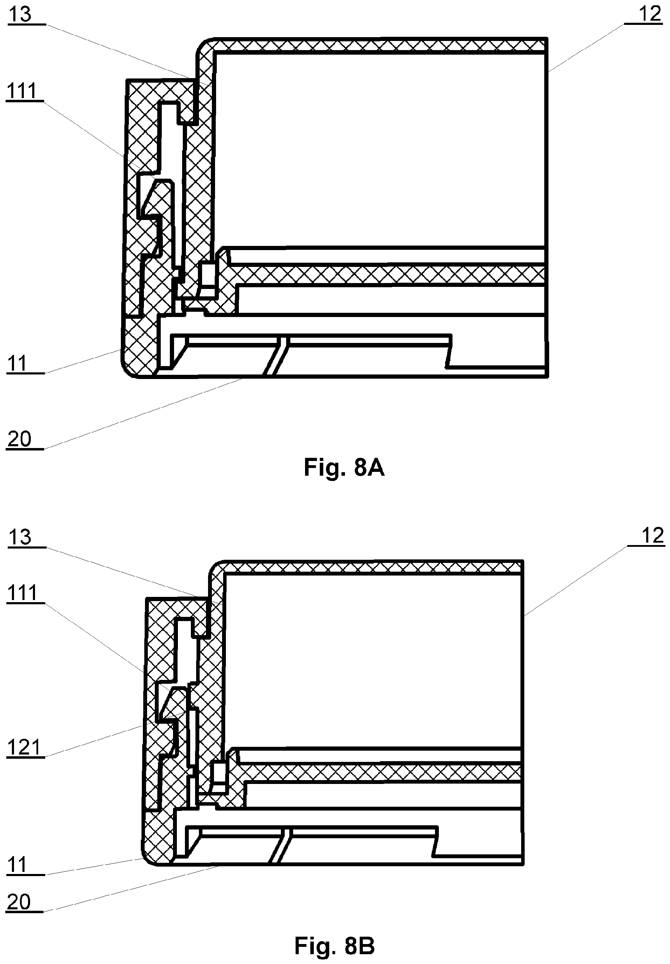

Fig. 8A shows a portion of the assembly for securing the flow meter against its opening according to the invention with the counting mechanism in the production position in cross section;
Fig. 8B shows a portion of the assembly for securing the flow meter against its opening according to the invention with the counting mechanism in the locked position in cross section.

### Description of the invention

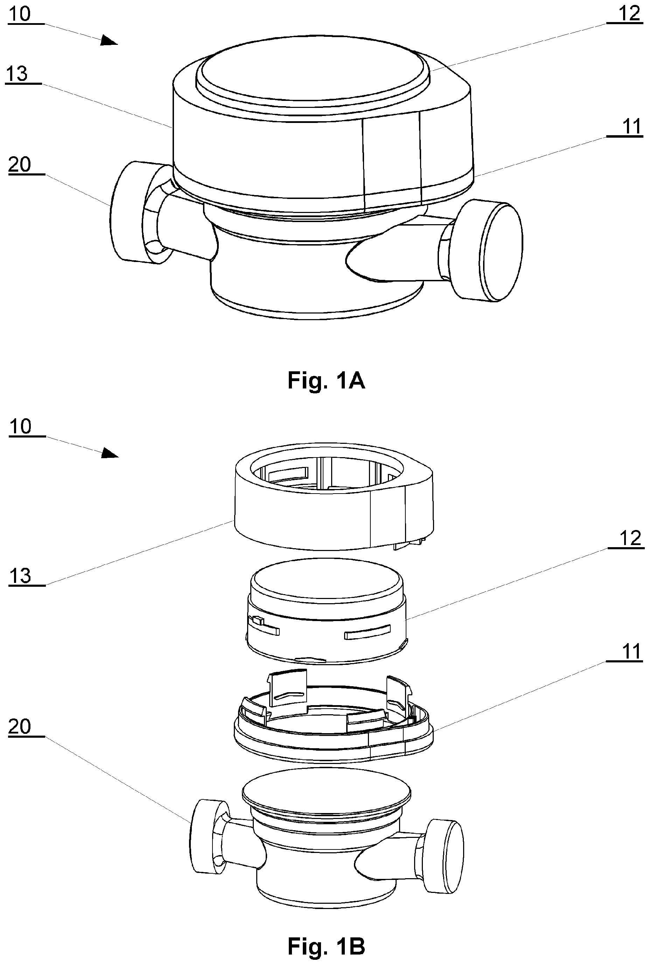

Figures 1A-B show an assembly for securing a flow meter 10 against opening, adapted to be mounted on a body 20 of the flow meter 10. The assembly comprises a mounting ring 11 which is adapted to be mounted on the body 20 of the flow meter 10 using an assembly press. Furthermore, the security assembly according to the invention comprises a counting mechanism cover 12 and a shielding ring 13, the counting mechanism cover 12 being adapted to lock the mounting ring 11 and the shielding ring 13, and the shielding ring 13 is adapted to cover the mounting ring 11 and the counting mechanism cover 12.

The mounting ring 11, the counting mechanism cover 12 and the shielding ring 13 can be made of plastic, for example polycarbonate (PC), acrylonitrile-butadienestyrene (ABS) terpolymer, combination of polycarbonate and acrylonitrile-butadienestyrene terpolymer, polyamide (PA), polystyrene (PS), polyester (PET), 2-diphenyloxazole (PPO), poly (butylene terephthalate) (PBT), polyolefins (PP or PE) or composites of the above materials filled with glass fiber, glass beads or carbon fibers.

### The mounting ring

### The first embodiment of the mounting ring

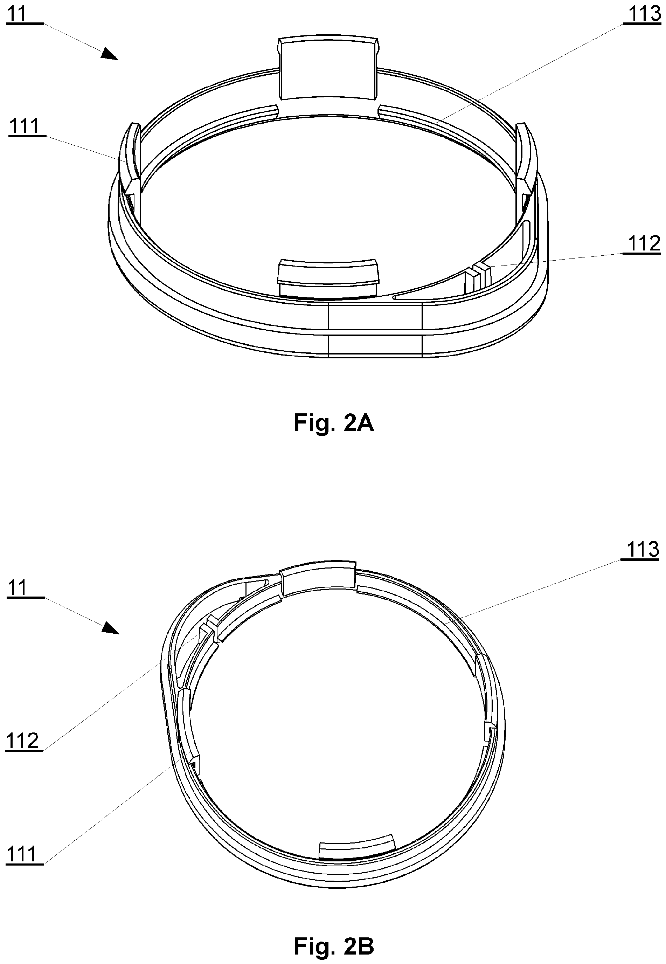

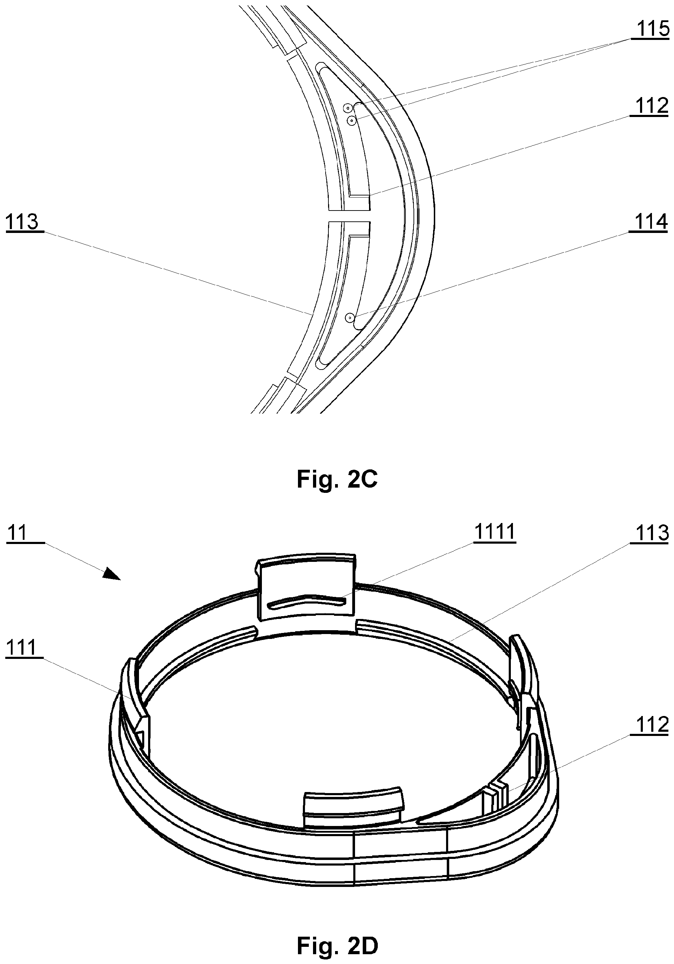

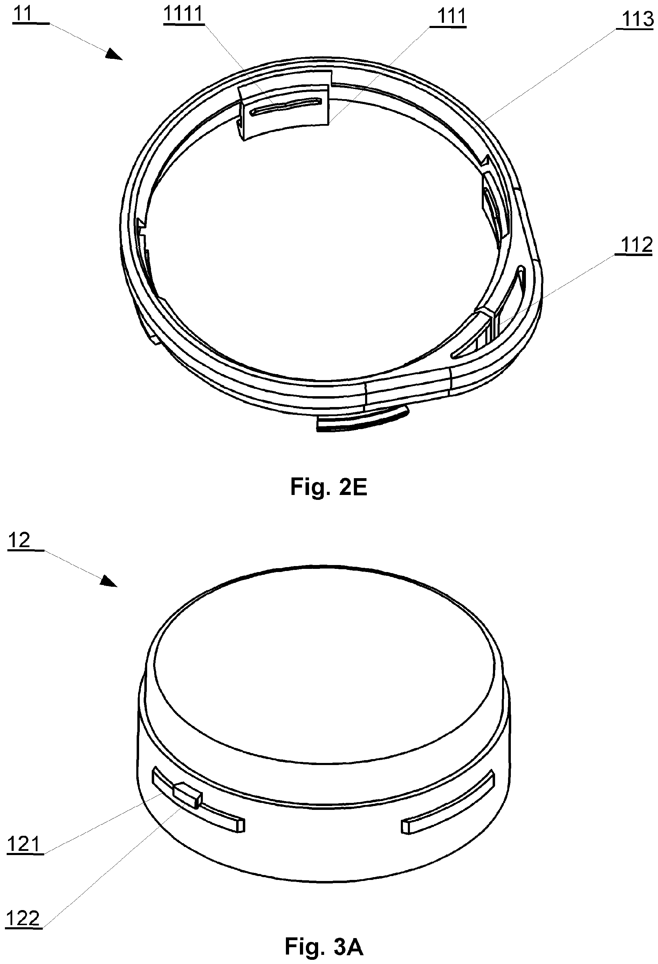

The mounting ring 11 according to the first embodiment (Figs. 2A-2B) comprises four retaining latches 111 adapted to support the shielding ring 13 and four security latches 113 adapted to mount the ring from the side of the flow meter body 20, whereby the retaining latches 111 of the mounting ring 11 are angularly offset from its bounding box.

The use of the four retaining latches 111 and the four security latches 113 ensures optimal operation of the assembly for securing the flow meter 10.

The mounting ring 11 also includes a pair of ribs 112 to protect it against spreading.

Furthermore, the said mounting ring 11 comprises a first indicating element 114 and a second indicating element 115 indicating its position relative to the counting mechanism cover 12.

### The second embodiment of the mounting ring

Fig. 2D-2E shows the mounting ring 11 as in the first embodiment except that it includes temporary locks 1111 holding the counting mechanism cover 12 in the production position during the water meter verification process.

### Counting mechanism cover

### The first embodiment of the counting mechanism cover

The counting mechanism cover 12 according to the first embodiment (Fig. 3A) comprises four locking splines 121 preventing the retaining latches 111 of the mounting ring 11 from bending back, as well as two locking elements 122 preventing it from rotating relative to the shielding ring 13 and the mounting ring 11, whereby this lock allows the counting mechanism cover 12 to be rotated after locking in the range of 0 to 45 degrees using the four retaining latches 111 and the two locking splines 122.

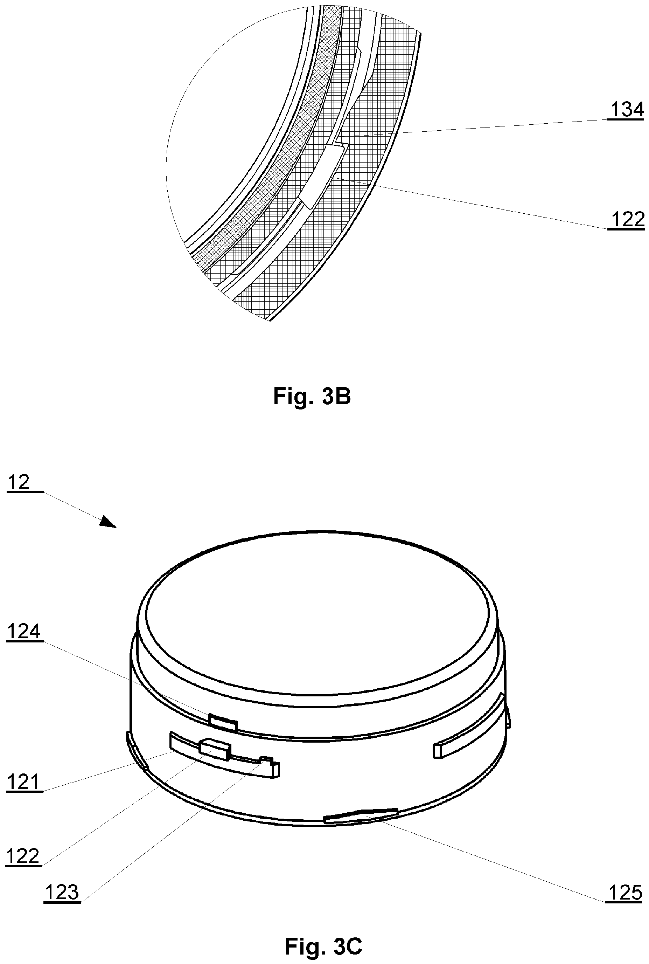

Furthermore, the locking elements 122 in combination with the latches 134 prevent unlocking of the assembly for securing the flow meter 10. The use of negative angles (Fig. 3B) which, when attempted to unlock, cause clamping of the counting mechanism cover 12 and the shielding ring 13 is of utmost importance.

The use of the four locking splines 121, corresponding to the four retaining latches 111, ensures optimal operation of the assembly for securing the flow meter 10.

### The second embodiment of the counting mechanism cover

The counting mechanism cover 12 according to the second embodiment (Fig. 3C) as in the first embodiment, except that it comprises an indicating element 123 which indicates the position of the counting mechanism adapted to cooperate with the indicator elements 114, 115 of the mounting ring 11.

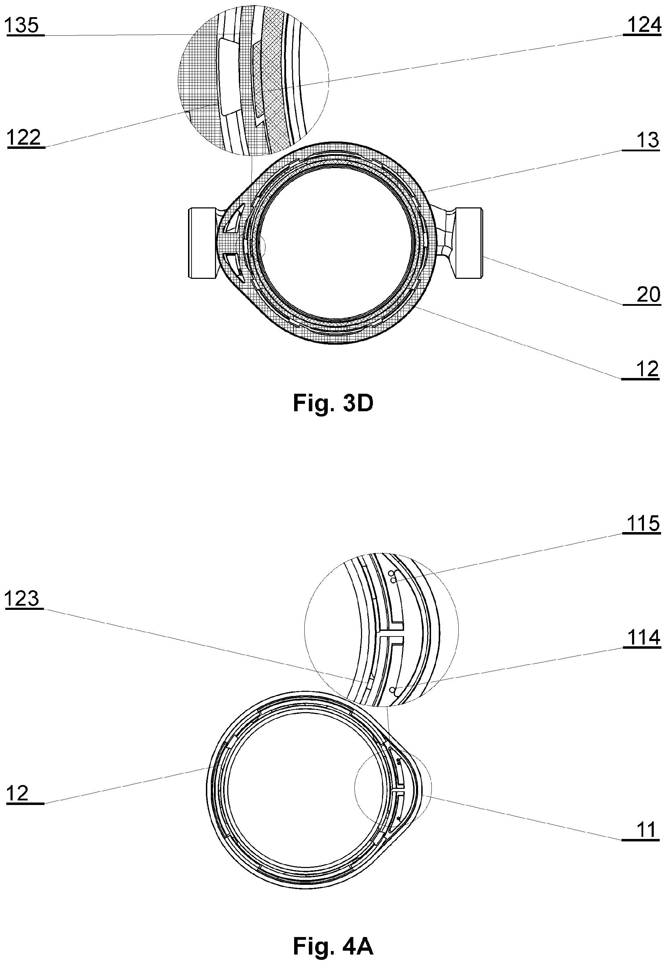

The counting mechanism cover 12 also comprises a stop 124 cooperating with a spline 135 that allows the counting mechanism cover 12 to rotate in one direction only (Fig. 3D).

Furthermore, the counting mechanism cover 12 comprises a spline 125 adapted to cooperate with the temporary locks 1111 of the production position. The said spline 125 allows the initial holding of the cover 12 and the mounting ring 11 during the verification process.

### The shielding ring

### The first embodiment of the shielding ring

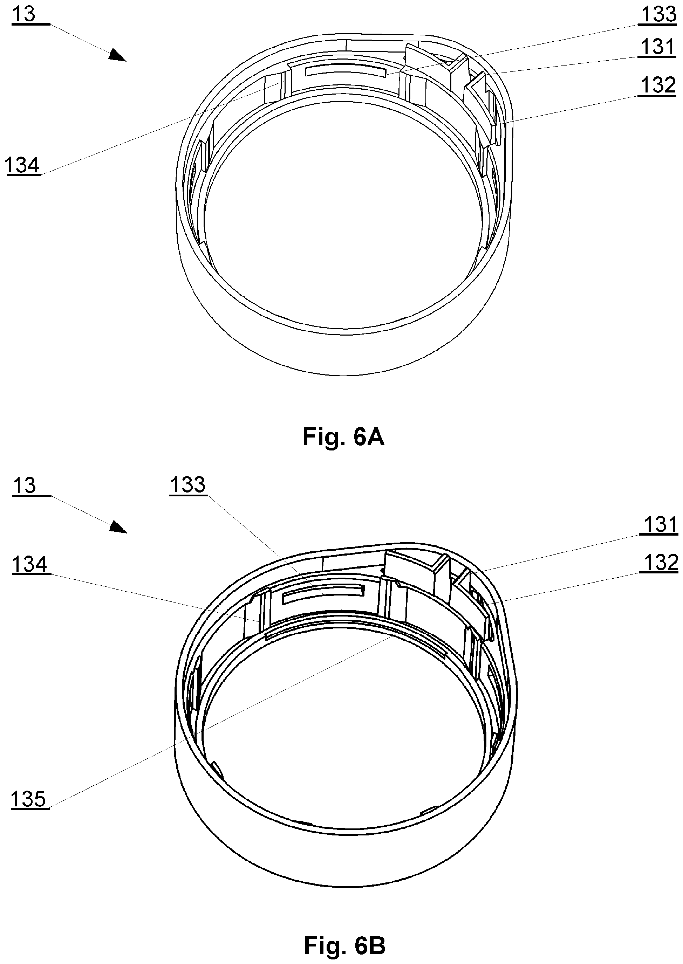

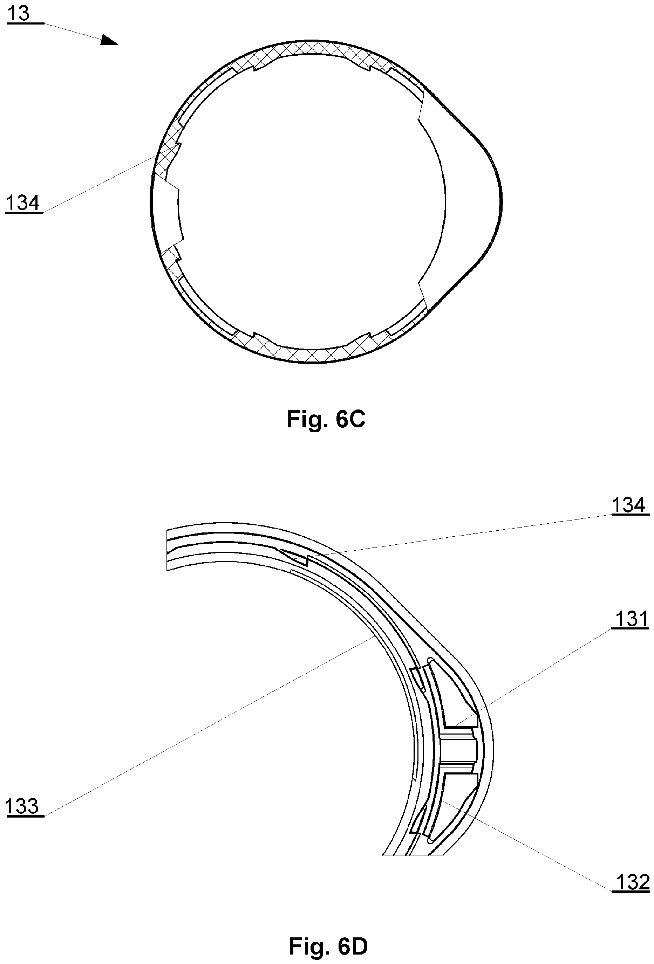

The shielding ring 13 according to the first embodiment (Fig. 6A) has four notches 133 adapted to snap the retaining latches 111 of the mounting ring 11. The use of the four notches 133 corresponding to the four retaining latches 111 ensures optimal operation of the assembly for securing the flow meter 10.

Furthermore, the shielding ring 13 includes eight latches 134 adapted to face its walls with the walls of the mounting ring 11 and block the rotation of the counting mechanism cover 12 in cooperation with the locking elements 122 of the counting mechanism cover 12. The number of the said latches corresponds structurally to the use of the four notches 133 of the shielding ring.

The shielding ring 13 may contain a number embossed on it, which makes it possible to further number the manufactured meters with previously numbered shielding rings.

### The second embodiment of the shielding ring

The shielding ring 13 according to the second embodiment (Fig. 6B) as in the first embodiment except that it additionally has a spline 135, which together with the stop 124 ensures that the counting mechanism cover 12 is turned in the right direction. In addition, its latches 134 are elongated, which improves the facing of the said ring with the mounting ring 11.

The assembly for securing the flow meter against its opening may include the components disclosed in the above embodiments in the combinations indicated below.

| Mounting ring | Counting mechanism cover | Shielding ring |
|---|---|---|
| 1 | 1 | 1 |
| 1 | 1 | 2 |
| 2 | 2 | 2 |
| 2 | 1 | 1 |
| 2 | 1 | 2 |

| | | |
|---|---|---|
| 1 - first embodiment 2 - second embodiment | | |

### Making the assembly

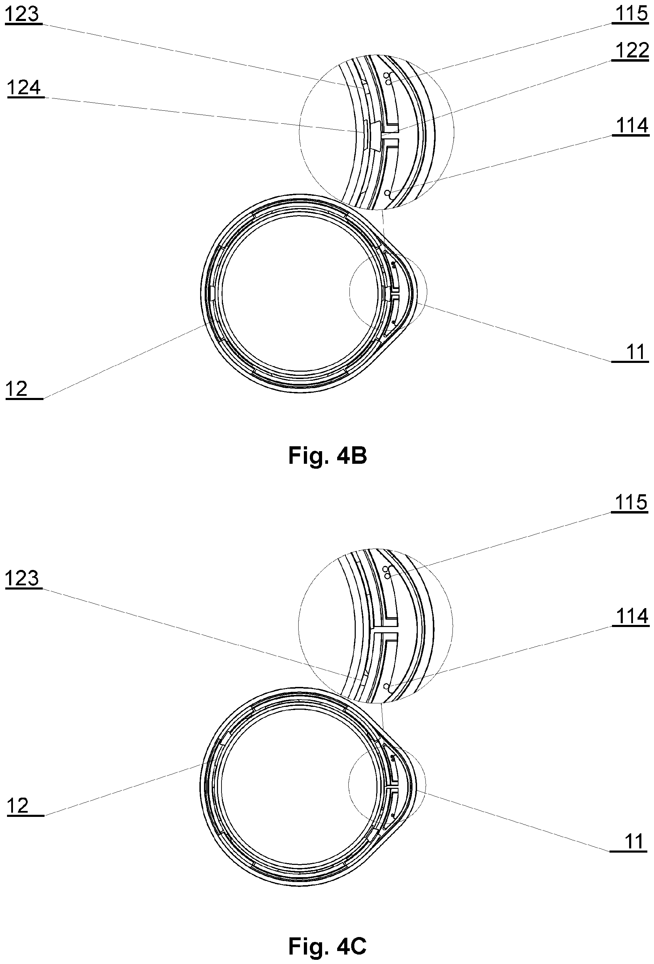

The counting mechanism cover 12 is mounted axially together with the mounting ring 11 on the body 20 of the flow meter 10 so that the first indicating element 114 of the mounting ring 11 is in the same angular position as the indicating element 123 of the counting mechanism 12 (Fig. 4A). Then the counting mechanism cover 12 is turned to the production position, so that the indicating element 123 of the said cover 12 is in the same angular position as the second indicating element 115 of the said ring (Fig. 4B). The shielding ring 13 is clamped in the next step. To completely block the assembly for securing the flow meter 10, the counting mechanism cover 12 is turned so that its indicating element 123 is in the same angular position as the first indicating element 114 of the mounting ring 11 (Fig. 4C).

## Claims

1. An assembly for securing a flow meter (10) against opening comprising:
- a mounting ring (11),
- a counting mechanism cover (12),
- a shielding ring (13),
whereby the mounting ring (11) is adapted to mount on a flow meter body (20) and comprises:
- at least two security latches (113) adapted for mounting the ring on the side of the flow meter body (20),
and the counting mechanism cover (12) is adapted to lock the mounting ring (11) and the shielding ring (13) and comprises:
- at least two locking elements (122) for locking its rotation relative to the mounting ring (11),
while the shielding ring (13) is adapted to cover the counting mechanism cover (12), **characterized in that**,
the mounting ring (11) further comprises:
- at least two retaining latches (111) adapted to support the shielding ring (13),
- a pair of ribs (112) adapted to protect against its spreading,
and
the counting mechanism cover (12) further comprises:
- locking splines (121) preventing the retaining latches (111) of the mounting ring (11) from bending back,
wherein the at least two locking elements (122) are also for locking its rotation relative to the shield ring (13),
and
the shield ring is further adapted to cover the counting mechanism (12) and comprises:
- a pair of ribs (131) reinforced with additional walls (132) to prevent bending outwards and spreading of the mounting ring (11),
- at least two notches (133) adapted to latch the retaining latches (111) of the mounting ring (11),
- at least two latches (134) adapted to face its walls with the walls of the mounting ring (11) and block the rotation of the counting mechanism cover (12) in cooperation with the locking elements (122) of the counting mechanism cover (12).

2. The assembly, according to claim 1, in which the mounting ring (11) comprises indicating elements (114, 115) which indicate the position of the ring.

3. The assembly, according to any of the previous claims, in which the counting mechanism cover (12) comprises an indicating element (123) which indicates the position of the counting mechanism.

4. The assembly according to any one of the previous claims, in which the retaining latches (111) of the mounting ring (11) are provided with temporary locks (1111) and the counting mechanism cover (12) comprises a spline (125) adapted to cooperate with the temporary locks (1111).

5. The assembly according to any of the previous claims, wherein the counting mechanism cover (12) comprises a stop (124).

6. A flow meter comprising the assembly as claimed in any one of claims from 1 to 5.

7. The flow meter according to claim 6 adapted to measure water or gas flow.

## Patentansprüche

1. Ein Zusammenbau zum Sichern eines Durchflussmessers (10) gegen Öffnen, umfassend:
- einen Montagering (11),
- eine Zählwerksabdeckung (12),
- einen Abschirmring (13),
wobei der Montagering (11) zur Montage an einem Durchflussmesserkörper (20) geeignet ist und Folgendes umfasst:
- mindestens zwei Sicherheitsverriegelungen (113), die zur Montage des Rings an der Seite des Durchflussmesserkörpers (20) geeignet sind,
und die Zählwerkabdeckung (12) ist zum Verriegeln des Montagerings (11) und des Abschirmrings (13) geeignet und umfasst:
- mindestens zwei Verriegelungselemente (122) zur Verriegelung seiner Drehung in Bezug auf den Montagering (11),
während der Abschirmring (13) so angepasst ist, dass er die Zählwerkabdeckung (12) abdeckt,
**dadurch gekennzeichnet, dass**,
der Montagering(11) außerdem umfasst:
- mindestens zwei Halteklinken (111), die so beschaffen sind, dass sie den Abschirmring (13) halten,
- ein Paar Rippen (112), die geeignet sind, ihn vor einer Spreizung zu schützen,
und
die Zählwerkabdeckung (12) außerdem umfasst:
- Verriegelungsrippen (121), die ein Zurückbiegen der Haltelaschen (111) des Montagerings (11) verhindern,
wobei die mindestens zwei Verriegelungselemente (122) auch dazu dienen, seine Drehung relativ zum Abschirmring (13) zu verriegeln, und der Abschirmring ist ferner geeignet, das Zählwerk (12) abzudecken, und umfasst:
- ein Paar Rippen (131), die mit zusätzlichen Wänden (132) verstärkt sind, um ein Verbiegen nach außen und eine Spreizung des Montagerings (11) zu verhindern,
- mindestens zwei Einkerbungen (133), die so beschaffen sind, dass sie in die Haltelaschen (111) des Montagerings (11) einrasten,
- mindestens zwei Laschen (134), die so beschaffen sind, dass sie mit ihren Wänden den Wänden des Montagerings (11) gegenüberliegen und die Drehung des Deckels (12) des Zählwerks in Zusammenarbeit mit den Verriegelungselementen (122) des Deckels (12) des Zählwerks blockieren.

2. Zusammenbau nach Anspruch 1, bei dem der Montagerings (11) Anzeigeelemente (114, 115) umfasst, die die Position des Rings anzeigen.

3. Zusammenbau nach einem der vorhergehenden Ansprüche, bei dem die Zählwerksabdeckung (12) ein Anzeigeelement (123) aufweist, das die Position des Zählwerks anzeigt.

4. Zusammenbau nach einem der vorhergehenden Ansprüche, bei dem die Haltelaschen (111) des Montagerings (11) mit temporären Verriegelungen (1111) versehen sind und die Zählwerksabdeckung (12) eine Nut (125) aufweist, die mit den temporären Verriegelungen (1111) zusammenwirken kann.

5. Zusammenbau nach einem der vorhergehenden Ansprüche, wobei die Zählwerksabdeckung (12) einen Anschlag (124) aufweist.

6. Durchflussmesser mit dem in einem der Ansprüche 1 bis 5 beanspruchten Zusammenbau.

7. Durchflussmesser nach Anspruch 6, der zum Messen von Wasser- oder Gasdurchfluss geeignet ist.

## Revendications

1. Ensemble de fixation d'un débitmètre (10) contre l'ouverture comprenant :
- un anneau de montage (11),
- un couvercle de mécanisme de comptage (12),
- un anneau de blindage (13),
de sorte que l'anneau de montage (11) est adapté pour être monté sur un corps de débitmètre (20) et comprend :
- au moins deux loquets de sécurité (113) adaptés au montage de l'anneau sur le côté du corps de débitmètre (20),
et le couvercle du mécanisme de comptage (12) est adapté pour verrouiller l'anneau de montage (11) et l'anneau de blindage (13) et comprend :
- au moins deux éléments de verrouillage (122) pour verrouiller sa rotation par rapport à l'anneau de montage (11),
tandis que l'anneau de blindage (13) est adapté pour couvrir le couvercle de mécanisme de comptage (12),
**caractérisé en ce que**
l'anneau de montage (11) comprend en outre :
- au moins deux loquets de retenue (111) adaptés pour soutenir l'anneau de blindage (13),
- une paire de nervures (112) destinées à le protéger contre l'écartement,
et
le couvercle de mécanisme de comptage (12) comprend en outre :
- des cannelures de verrouillage (121) empêchant les loquets de retenue (111) de l'anneau de montage (11) de se replier
dans lequel les au moins deux éléments de verrouillage (122) sont également destinés à verrouiller sa rotation par rapport à l'anneau de blindage (13),
et l'anneau de blindage est en outre adapté pour couvrir le mécanisme de comptage (12) et comprend :
- une paire de nervures (131) renforcées par des parois supplémentaires (132) pour empêcher la déformation vers l'extérieur et l'écartement de l'anneau de montage (11),
- au moins deux encoches (133) adaptées pour verrouiller les loquets de retenue (111) de l'anneau de montage (11),
- au moins deux loquets (134) adaptés pour faire face avec ses parois aux parois de l'anneau de montage (11) et bloquer la rotation du couvercle de mécanisme de comptage (12) en coopération avec les éléments de verrouillage (122) du couvercle de mécanisme de comptage (12).

2. Ensemble selon la revendication 1, dans lequel l'anneau de montage (11) comprend des éléments indicateurs (114, 115) qui indiquent la position de l'anneau.

3. Ensemble, selon l'une quelconque des revendications précédentes, dans lequel le couvercle de mécanisme de comptage (12) comprend un élément indicateur (123) qui indique la position du mécanisme de comptage.

4. Ensemble selon l'une quelconque des revendications précédentes, dans lequel les loquets de retenue (111) de l'anneau de montage (11) sont munis de verrous temporaires (1111) et le couvercle de mécanisme de comptage (12) comprend une cannelure (125) adaptée pour coopérer avec les verrous temporaires (1111).

5. Ensemble selon l'une quelconque des revendications précédentes, dans lequel le couvercle de mécanisme de comptage (12) comprend une butée (124).

6. Débitmètre comprenant l'ensemble selon l'une quelconque des revendications 1 à 5.

7. Débitmètre selon la revendication 6, adapté pour mesurer le débit d'eau ou de gaz.
